# FASCICULE DE BREVET EUROPEEN

(11) **EP 1 065 075 B1**
(45) Date de publication et mention de la délivrance du brevet: **22.01.2003**
(21) Numéro de dépôt: 00112142.5
(22) Date de dépôt: 06.06.2000
(51) Int. Cl.: B60C 11/18, B60C 1/00, B60C 11/11, B60C 11/12

(54) **Sculpture réduisant le bruit de roulage d'un pneumatique**
Laufflächenprofil geeignet zum Begrenzen des durch das Laufen des Reifens erzeugten Geräusches
Tread pattern suitable for reducing the noise produced by a rolling tyre

(30) Priorité: 28.06.1999 FR 9908280
(43) Date de publication de la demande: 03.01.2001
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: Bruant, Rémi, 63200 Riom (FR)
(74) Mandataire: Diernaz, Christian

(56) Documents cités:
- EP-A- 0 239 719
- EP-A- 0 612 631
- FR-A- 1 506 219
- GB-A- 506 142
- GB-A- 2 183 205
- PATENT ABSTRACTS OF JAPAN vol. 012, no. 149 (M-694), 10 mai 1988 (1988-05-10) -& JP 62 268709 A (BRIDGESTONE CORP), 21 novembre 1987 (1987-11-21)

## Description

L'invention concerne le domaine des bandes de roulement pour pneumatiques et en particulier les bandes dont les éléments de relief (blocs ou nervures) sont pourvus d'incisions.

Il est connu de pourvoir la bande de roulement d'un pneumatique, que ce dernier soit destiné à équiper un véhicule de tourisme ou un véhicule poids lourd, d'une sculpture pour obtenir une performance d'adhérence satisfaisante en particulier sur sol rendu glissant par la présence d'un liquide. Une sculpture de bande de roulement comprend des blocs (parties de gomme limitées par des rainures) et/ou nervures (parties de gomme limitées par deux rainures s'étendant sensiblement dans la même direction) délimités par des rainures formées par moulage dans l'épaisseur de la bande de roulement.

Il est connu, pour améliorer les performances d'adhérence d'une bande de roulement, d'avoir recours à un grand nombre d'incisions réalisées sur les éléments de sculpture soit au cours du moulage de ladite sculpture soit après moulage et vulcanisation de ladite bande.

On entend par rainure, une découpure d'une largeur moyenne au moins égale à **2** mm et par incision, une découpure de moindre largeur c'est-à-dire de largeur moyenne inférieure à **2** mm. Selon l'effet recherché, ces découpures ont des profondeurs plus ou moins importantes relativement à l'épaisseur de la bande de roulement.

Il est également connu que des incisions réalisées sur un élément de relief (nervure ou bloc) et débouchant sur les bords dudit élément de relief - c'est-à-dire s'ouvrant dans les rainures limitant ledit élément - si elles favorisent un écoulement de fluide vers ces rainures, conduisent à une diminution sensible de la rigidité des régions de l'élément de relief près des bords de cet élément. La rigidité dont il est ici question correspond à la rigidité de déformation de l'élément de sculpture soumis à des efforts tangentiels s'exerçant sur sa surface de contact avec le sol.

Pour éliminer cet inconvénient, il a été proposé de réaliser des incisions qui ne débouchent pas sur les bords des éléments de sculpture (de telles incisions peuvent être qualifiées d'incisions "aveugles").

Malheureusement, cette disposition conduit à une augmentation du bruit de roulement du pneumatique équipé d'une bande de roulement pourvue d'une telle sculpture compte tenu de la présence d'un volume d'air emprisonné dans les incisions non débouchantes, augmentation d'autant plus importante que le nombre d'incisions est grand.

La demande de brevet japonaise publiée sous le numéro 62-268709, correspondant au préambule de la revendication 1, propose de réaliser une bande de roulement comportant à l'état neuf au moins une incision de très faible profondeur qui croise la trace des incisions aveugles. Cette disposition est certes intéressante à l'état neuf mais disparaît très rapidement avec l'usure de la bande.

Un objectif de la présente invention est de proposer une sculpture de bande de roulement ayant une excellente performance en adhérence sur sol glissant, c'est-à-dire pourvue d'un grand nombre d'arêtes, et qui ne présente pas les inconvénients qui viennent d'être présentés.

Afin d'atteindre l'objectif énoncé ci-dessus, l'invention propose une bande de roulement pour pneumatique, ladite bande de roulement étant pourvue d'une sculpture formée par des éléments de relief délimités par des rainures. En outre, une pluralité des éléments de relief sont pourvus d'incisions aveugles c'est-à-dire ne débouchant pas sur les bords desdits éléments dans les rainures.

L'élément de sculpture selon l'invention comprend, en outre, au moins une découpure qui débouche sur au moins un bord de l'élément de sculpture et qui a une trace d'orientation moyenne telle que, sur la surface de roulement, chaque incision aveugle croise au moins une découpure débouchante du même élément et cela quel que soit le niveau d'usure de la bande. La sculpture selon l'invention est caractérisée en ce que chacune des découpures débouchantes a une profondeur sensiblement égale à la profondeur des incisions aveugles qu'elle croise et est remplie d'un matériau de remplissage, ledit matériau de remplissage présentant la propriété de relier mécaniquement, au moins à l'état neuf, les parois de la découpure remplie et de s'user plus rapidement que le matériau constituant la bande de roulement. Sous les actions de contact de frottement avec le sol au cours du roulage, le matériau de remplissage s'élimine de façon progressive pour former un canal de profondeur très faible mais cependant suffisant pour permettre à une partie de l'air emprisonné dans les incisions aveugles de s'échapper.

Par canal de profondeur faible, on entend un canal dont la profondeur est de l'ordre de grandeur de la largeur de l'incision débouchante considérée. Par découpure de profondeur sensiblement égale à la profondeur des incisions aveugles, il faut comprendre que cette découpure a une profondeur égale à au moins 80% de la profondeur desdites incisions aveugles; il est également possible que la profondeur des découpures remplies soit supérieure à la profondeur des incisions aveugles qu'elles croisent.

Préférentiellement, la largeur des découpures débouchantes est au moins égale à **1.5** fois la largeur des incisions non débouchantes qu'elles croisent, de façon à avoir un effet d'évacuation de l'air emprisonné satisfaisant.

Il est entendu que, pour ne pas modifier et abaisser la rigidité des éléments de relief de la sculpture selon l'invention, les découpures débouchantes sont remplies d'un matériau qui assure une liaison mécanique appropriée des parois de gomme en vis-à-vis délimitant lesdites découpures.

La sculpture selon l'invention a l'avantage de présenter un grand nombre d'arêtes formées par les rainures et les incisions non débouchantes et également par les découpures débouchantes. Le croisement des incisions non débouchantes et des découpures débouchantes sur un même élément de sculpture, combiné à une vitesse d'usure plus grande pour le matériau de remplissage des découpures débouchantes que pour l'élément de sculpture a pour effet de former un canal d'évacuation d'au moins une partie de l'air emprisonné dans les incisions non débouchantes au moment du passage dans l'empreinte de contact du pneumatique avec le sol. Cela est possible sans que la rigidité de la sculpture en soit affectée et par conséquent sans que la performance d'usure soit diminuée.

En outre, les découpures débouchantes ayant des profondeurs au moins égales à 80% de la profondeur des incisions non débouchantes, le mécanisme décrit se poursuit régulièrement pendant toute la durée d'utilisation du pneumatique (et en particulier jusqu'à atteindre la limite d'usure de la bande de roulement) et assurent ainsi la pérennité de la performance recherchée en bruit de roulage.

Par matériau de remplissage, il faut entendre un matériau :
- qui assure une liaison mécanique satisfaisante entre les parois opposées de la découpure dans laquelle il est présent (au moins dans un premier temps de l'utilisation du pneumatique),
- et qui présente une vitesse d'usure par frottement au cours du roulage plus grande que la vitesse d'usure du mélange de caoutchouc composant la bande de roulement.

De façon plus générique, il est également avantageux d'appliquer l'enseignement de l'invention à une bande de roulement comportant des éléments de relief ayant au moins une incision ne débouchant que sur un bord dudit élément. Il a en effet été constaté que, dans certaines conditions de roulage; l'évacuation de l'air inclus dans ce type d'incision n'est pas suffisant et qu'il en résulte un accroissement sensible du niveau de bruit.

Les caractéristiques et avantages de l'invention seront mieux compris à l'aide des variantes de réalisation décrites ci-après et accompagnées du dessin suivant lequel:
- la figure **1** représente, vu en perspective, un bloc d'une sculpture d'une bande de roulement conforme à l'invention;
- la figure **2** montre, vu en perspective, le bloc de la figure **1** après une faible distance de roulage montrant une usure différentielle ;
- la figure **3** montre, vue en plan, un bloc de sculpture pourvue de trois incisions non débouchantes selon l'invention.

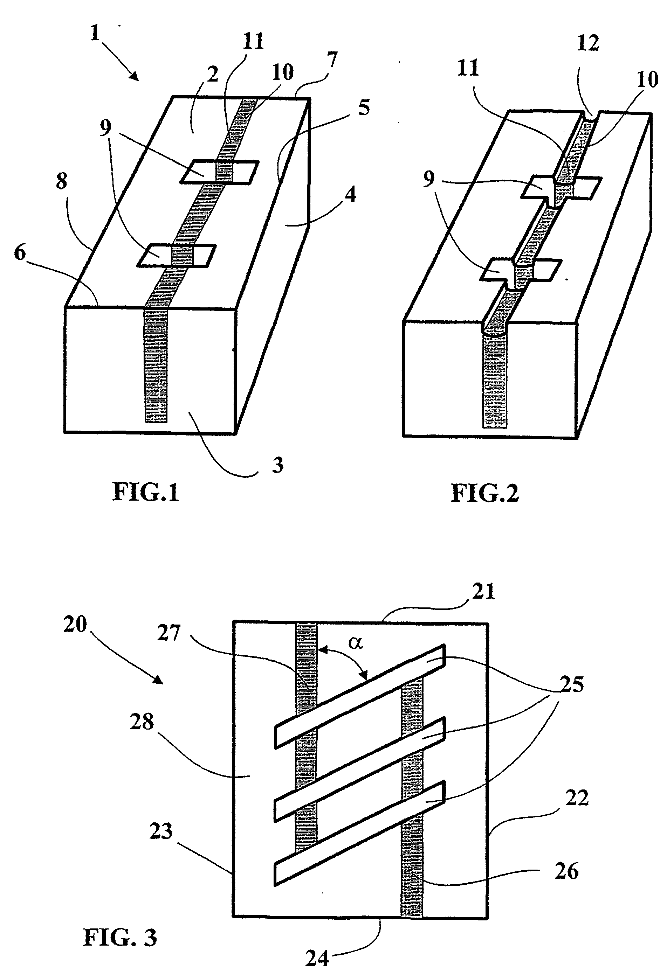

Sur la figure **1**, on distingue un bloc **1** d'une sculpture d'une bande de roulement d'un pneumatique; ce bloc a la forme d'un parallélépipède limité par quatre faces latérales (seules deux de ces faces **3, 4** sont visibles sur cette figure) et par une face supérieure **2** correspondant à la face du bloc venant en contact avec le sol pendant le roulage du pneumatique. L'intersection des faces latérales avec la face supérieure forme des arêtes **5, 6, 7, 8**. Ce bloc comporte deux incisions **9** non débouchantes, c'est-à-dire qu'elles ne coupent aucune des arêtes limitant la face supérieure du bloc **1** et cela quel que soit le niveau d'usure dudit bloc. Ces deux incisions **9** ont des tracés rectilignes sensiblement parallèles entre eux et d'orientation moyenne égale à l'orientation des arêtes **6** et **7**.

En outre, le bloc **1** comporte une découpure **10** dont les parois en vis-à-vis sont reliées mécaniquement par un matériau de remplissage **11** occupant en totalité le volume de cette découpure **10,** ladite découpure **10** ayant un tracé moyen en surface qui coupe les tracés des incisions **9** quel que soit le niveau d'usure de la bande (la profondeur de la découpure **10** est, dans l'exemple présenté, égale à la profondeur des incisions non débouchantes **9**).

Par matériau de remplissage **11**, on entend un matériau différent du mélange de caoutchouc composant le bloc **1,** ayant une caractéristique mécanique appropriée pour relier mécaniquement les faces opposées délimitant l'incision **10,** au moins à l'état neuf, et ayant en roulage une résistance à l'usure plus faible que la résistance à l'usure dudit mélange.

À titre d'exemple, le matériau de remplissage peut être obtenu à partir d'un matériau caoutchoutique auquel on incorpore des "additifs" ayant pour fonction d'augmenter la vitesse d'usure par frottement. Parmi ces additifs, on peut citer:
- des composés minéraux comme par exemple les charges peu ou pas renforçantes c'est à dire des charges de finesse très faible (objet de taille supérieure à **1** micron) : craie, silicates naturels (kaolin, talc, mica), silice broyée, alumine, charges obtenues par procédé chimique (silicates de Mg, Al, Ca, silico-aluminates hydratés, carbonates de calcium précipités), sulfate de Ba, oxydes (Mg, Zn, Al);
- des composés organiques comme par exemple des fibres coupées, fibrilles de thermoplastiques, composés biodégradables (polyester amide, amidon modifié, chitine, chitosan, acide polylactique), dérivés de la cellulose (acétate de cellulose, lignine);
- des produits naturels tels des résidus de son, des écorces de riz et tout autre dérivé de l'industrie alimentaire.

À l'état initial (c'est-à-dire après moulage du bloc et avant tout roulage), le matériau de remplissage **11** peut, comme c'est le cas sur la figure **1,** venir affleurer à la face supérieure **2** ou bien être en léger retrait par rapport à cette surface. Au cours du roulage, la différence de vitesse d'usure entre le matériau de remplissage et le mélange de caoutchouc composant le bloc de sculpture créé et entretient un décalage entre les deux matériaux comme visualisé à la figure **2**.

La figure **2** montre le bloc de la figure **1** après usure partielle résultant d'un roulage et selon laquelle le matériau de remplissage **11** de la découpure **10** est éliminé par usure sur une faible profondeur (quelques dixièmes de millimètres) formant une sorte de canal **12** mettant les incisions **9** en communication avec les arêtes **6** et **7** du bloc **1**. Ce canal **12** permet à l'air emprisonné dans les incisions non débouchantes **9** de se détendre et de s'échapper en partie pendant la phase de contact de la surface **2** du bloc **1** avec le sol au cours du roulage. Ce mécanisme apparaissant dès qu'une usure différentielle a été produite (en fait dès les premiers kilomètres parcourus) se poursuit de façon continue et régulière pendant toute la durée de l'utilisation de la bande de roulement pourvue d'un tel bloc de sculpture, ce qui assure la pérennité de la performance en bruit de roulage d'une bande de roulement pourvu d'éléments de relief selon l'invention.

Dans un mode de fabrication possible, il est proposé de former dans un premier temps une bande non vulcanisée comprenant une succession de bandes de mélange de caoutchouc et d'intercalaires de manière à former une bande de type feuilletée. Cette bande est ensuite placée sur une ébauche de pneumatique avant moulage dudit pneumatique et formation des éléments de relief et des diverses incisions. Les intercalaires disposés de manière à déboucher sur la surface de roulement du pneumatique moulé, sont réalisés dans un matériau qui, après vulcanisation, présente une résistance à l'usure plus petite que celle du mélange de caoutchouc de la bande de roulement.

La variante qui vient d'être décrite est susceptible d'être modifiée sans pour autant modifier le principe de l'invention; par exemple, le tracé de la découpure **10** remplie à l'état initial peut avoir une forme courbe et/ou être inclinée par rapport à la direction perpendiculaire à la surface de roulement. On peut également prévoir que chaque incision non débouchante coupe une découpure remplie avec un matériau de remplissage, ladite découpure remplie débouchant uniquement sur une des faces latérales du bloc.

Pour améliorer la tenue mécanique du matériau de remplissage à l'intérieur de chaque découpure remplie, il est judicieux de prévoir que ladite découpure suive, dans la direction de l'épaisseur de la bande de roulement, un tracé présentant au moins une ondulation ou un tracé en zigzag.

Bien sûr, ce qui a été décrit au cas d'un élément de sculpture sous la forme d'un bloc en forme de parallélépipède s'applique de façon similaire à tout autre bloc de forme quelconque ou encore à une nervure; dans ce dernier cas, les découpures remplies d'un matériau de remplissage sont prévues pour déboucher sur au moins une desdites rainures délimitant ladite nervure.

Sur la figure **3**, qui est une vue en élévation, il est représenté la face supérieure **28** d'un bloc de sculpture **20**, cette face **28** étant limitée par quatre arêtes **21, 22, 23, 24**. Trois incisions **25**, de tracé rectiligne et parallèles entre elles, débouchent sur la face **28** sans jamais - c'est-à-dire quelque soit le niveau d'usure - déboucher sur les arêtes **21, 22, 23, 24**. De façon complémentaire, deux découpures **26, 27** rectilignes et remplies d'un matériau de remplissage croisent les incisions non débouchantes **25** et font avec elles un angle moyen α. En outre, la découpure **26** remplie d'un matériau de remplissage ne débouche que sur une face latérale du bloc **20** et vient couper l'arête **24**, tandis que l'autre découpure **27** ne débouche que sur la face latérale opposée du bloc **20** et coupe l'arête **21**. Ces découpures débouchantes ont des profondeurs égales aux profondeurs des incisions non débouchantes.

Cette configuration présente l'intérêt de ne pas diminuer la rigidité du bloc sur les côtés où les incisions non débouchantes sont au plus près des arêtes et donc de ne pas occasionner d'usure irrégulière (c'est-à-dire d'usure localisée sur certaines arêtes du bloc de sculpture).

Tout en restant dans l'esprit de l'invention, il est possible d'employer comme matériau de remplissage un matériau se présentant sous la forme d'une feuille, par exemple de papier, de carton ou en mélange de caoutchouc, cette feuille étant pourvue d'au moins un orifice pour laisser passer le mélange de caoutchouc de la bande et permettre ainsi la formation d'au moins un pont de liaison entre les faces en vis-à-vis de chaque incision remplie par ce matériau de remplissage. Dans le cas d'une feuille en papier ou carton celle-ci peut bien entendu être traitée pour assurer un minimum de collage avec le mélange de caoutchouc de la bande de roulement.

Pour accroître encore l'efficacité de la liaison mécanique entre les faces en vis-à-vis de chaque découpure remplie, la feuille servant au remplissage peut comporter une pluralité d'orifices pour laisser passer le mélange de caoutchouc pendant le moulage de la bande de roulement de manière à former des ponts de liaison entre les parois opposées limitant ladite découpure.

En combinaison avec l'une quelconque des variantes décrites, on peut également prévoir sur la surface de roulement de la bande de roulement à l'état initial la présence d'incisions de faible profondeur croisant les incisions non débouchantes. Ces incisions jouent le rôle de canal d'évacuation de l'air emprisonné dans les incisions non débouchantes pendant le temps nécessaire à la formation d'au moins un canal par usure du matériau de remplissage des incisions débouchantes remplies avec ledit matériau. Ces incisions, présentes à l'état neuf, ne modifient pas de façon sensible la rigidité de la sculpture et disparaissent après une usure partielle de la bande de roulement dès les premiers kilomètres de roulage.

Il est également envisageable de remplir l'ensemble des incisions débouchantes et non débouchantes d'un même élément de sculpture d'une bande de roulement avec un même matériau de remplissage s'usant plus rapidement que le mélange de ladite bande. Avantageusement, le matériau de remplissage des incisions débouchantes est différent du matériau de remplissage des incisions non débouchantes; l'effet recherché pouvant être d'obtenir une élimination, plus rapide et surtout plus dans la profondeur, du matériau de remplissage des incisions non débouchantes par exemple sous l'action de l'humidité.

## Revendications

1. Bande de roulement pour pneumatique, ladite bande de roulement étant pourvue d'une sculpture formée d'éléments de relief délimités par des rainures, ces éléments de relief présentant des faces latérales et une face supérieure destinée à venir en contact avec le sol pendant le roulage du pneumatique, une pluralité d'éléments de relief (**1, 20**) étant pourvus d'incisions **(9, 25)** ne débouchant au plus que sur une des faces latérales desdits éléments, chaque élément de relief **(1, 20)** pourvu d'au moins une incision ne débouchant au plus que sur une de ses faces latérales, comprenant au moins une découpure **(10, 26, 27)** débouchant sur au moins une face latérale de l'élément de sculpture, ladite bande étant **caractérisée en ce que** cette découpure est remplie d'un matériau de remplissage, chaque incision ne débouchant au plus que sur une de ses faces latérales croisant au moins une découpure remplie ayant sensiblement la même profondeur, et **en ce que** ledit matériau présente la propriété de relier mécaniquement, au moins à l'état neuf, les parois de la découpure remplie et de s'user plus rapidement que le matériau constituant la bande de roulement de façon à s'éliminer progressivement et régulièrement au cours du roulage par usure pour former un canal d'évacuation d'une partie de l'air présent dans les incisions.

2. Bande de roulement pour pneumatique selon la revendication 1 **caractérisée en ce que** certains de ses éléments de relief (**1, 20)** sont pourvus d'au moins une incision aveugle **(9, 25),** c'est-à-dire ne débouchant sur aucune des faces latérales desdits éléments et cela quel que soit le niveau d'usure de ladite bande, chaque incision aveugle croisant au moins une découpure débouchante (**10, 26, 27**) et remplie d'un matériau de remplissage s'usant plus rapidement que le matériau constituant la bande de roulement, chaque découpure débouchante ayant une profondeur au moins égale à 80% de la profondeur de la ou des incisions qu'elle croise.

3. Bande de roulement pour pneumatique selon la revendication **2 caractérisée en ce que** la découpure débouchante (**10**) coupant au moins une incision non débouchante (**9**) débouche sur au moins deux faces latérales de l'élément de relief (**1**).

4. Bande de roulement pour pneumatique selon l'une quelconque des revendications **1** à **3 caractérisée en ce que** la largeur moyenne des découpures débouchantes est au moins égale à **1.5** fois la largeur moyenne des incisions non débouchantes.

5. Bande de roulement pour pneumatique selon l'une des revendications **1** à **4 caractérisée en ce que** le matériau de remplissage est un mélange de caoutchouc auquel est ajouté un composé minéral comme par exemple une charge claire peu ou pas renforçante : craie, silicates naturels (kaolin, talc, mica), silice broyée, alumine, charges obtenues par procédé chimique (silicates de Mg, Al, Ca, silico-aluminates hydratés, carbonates de calcium précipités), sulfate de Ba, oxydes ( Mg, Zn , Al).

6. Bande de roulement pour pneumatique selon l'une des revendications **1** à **5 caractérisée en ce que** le matériau de remplissage est un mélange de caoutchouc auquel est ajouté un composé organique comme par exemple des fibres coupées, fibrilles de thermoplastiques, composés biodégradables (polyester amide, amidon modifié, chitine, chitosan, acide polylactique), dérivés de la cellulose (acétate de cellulose, lignine).

7. Bande de roulement pour pneumatique selon l'une des revendications **1** à **6 caractérisée en ce que** le matériau de remplissage est employé sous forme de feuille comportant, au travers de son épaisseur, au moins un orifice pour laisser passer le mélange de caoutchouc pendant le moulage de ladite bande afin de mouler au moins un pont de liaison mécanique reliant les faces opposées de chaque découpure remplie.

8. Bande de roulement pour pneumatique selon l'une des revendications **1** à **7 caractérisée en ce qu'**au moins une découpure remplie avec un matériau de remplissage suit, dans la direction de l'épaisseur de ladite bande, un tracé présentant au moins une ondulation ou un tracé en zigzag de façon à améliorer la tenue mécanique dudit matériau.

9. Pneumatique comportant une bande de roulement définie selon l'une des revendications **1** à **8**.

## Claims

1. A tread for a tyre, said tread being provided with a tread pattern formed by elements in relief defined by grooves, these elements in relief having lateral faces and an upper face which is intended to come into contact with the ground during the travel of the tyre, a plurality of elements in relief (1, 20) being provided with incisions (9, 25) which open at most onto only one of the lateral faces of said elements, each element in relief (1, 20) provided with at least one incision which opens at most on to only one of its lateral faces, comprising at least one cutout (10, 26, 27) which opens on to at least one lateral face of the tread pattern element, said tread being **characterised in that** this cutout is filled with a filler material, each incision opening at most onto only one of its lateral faces which crosses at least one filled cutout having substantially the same depth, and **in that** said material has the property of mechanically connecting, at least when new, the walls of the filled cutout and of wearing more rapidly than the material forming the tread so as to be eliminated gradually and regularly during travel by wear to form a channel for evacuating part of the air present in the incisions.

2. A tread for a tyre according to Claim 1, **characterised in that** some of its elements in relief (1, 20) are provided with at least one blind incision (9, 25), that is to say, one which does not open on to any of the lateral faces of said elements, whatever the level of wear of said tread, each blind incision crossing at least one open-ended cutout (10, 26, 27) filled with a filler material which wears more rapidly than the material constituting the tread, each open-ended cutout having a depth equal to at least 80% of the depth of the incision or incisions which it crosses.

3. A tread for a tyre according to Claim 2, **characterised in that** the open-ended cutout (10) which intersects at least one blind incision (9) opens on to at least two lateral faces of the element in relief (1).

4. A tread for a tyre according to any one of Claims 1 to 3, **characterised in that** the average width of the open-ended cutouts is at least equal to 1.5 times the average width of the blind incisions.

5. A tread for a tyre according to one of Claims 1 to 4, **characterised in that** the filler material is a rubber mix to which is added a mineral compound such as, for example, a clear filler which is only slightly or not reinforcing: chalk, natural silicates (kaolin, talc, mica), crushed silica, alumina, fillers obtained by a chemical process (Mg, Al, Ca silicates, hydrated silico-aluminates, precipitated calcium carbonates), Ba sulphate, oxides (Mg, Zn, Al).

6. A tread for a tyre according to one of Claims 1 to 5, **characterised in that** the filler material is a rubber mix to which is added an organic compound such as, for example, staple fibres, thermoplastics fibrils, biodegradable compounds (polyester amide, modified starch, chitin, chitosan, polylactic acid), cellulose derivatives (cellulose acetate, lignin).

7. A tread for a tyre according to one of Claims 1 to 6, **characterised in that** the filler material is used in the form of a sheet comprising, across its thickness, at least one orifice for the rubber mix to pass through during the moulding of said tread in order to mould at least one mechanical connecting bridge connecting the opposite faces of each filled cutout.

8. A tread for a tyre according to one of Claims 1 to 7, **characterised in that** at least one cutout filled with a filler material, in the direction of the thickness of said tread, follows a trace having at least one undulation or a zigzag trace so as to improve the mechanical strength of said material.

9. A tyre comprising a tread defined in accordance with one of Claims 1 to 8.

## Patentansprüche

1. Lauffläche für einen Reifen, wobei die genannte Lauffläche mit einem Profil versehen ist, das aus vorspringenden Elementen gebildet ist, die durch Rillen begrenzt sind, diese vorspringenden Elemente seitliche Flächen und eine obere Fläche aufweisen, die dazu bestimmt ist, während des Abrollens des Reifens in Berührung mit dem Boden zu gelangen, eine Vielzahl vorspringender Elemente (1, 20) mit Einschnitten (9, 25) versehen ist, die höchstens nur auf einer seitlichen Fläche der genannten Elemente einmünden, jedes vorspringende Element (1, 20), das mit mindestens einem Einschnitt versehen ist, der höchstens auf einer seiner seitlichen Flächen einmündet, mindestens einen Ausschnitt (10, 26, 27) aufweist, der an mindestens einer seitlichen Fläche des Profilelementes einmündet, und die genannte Lauffläche **dadurch gekennzeichnet ist, daß** dieser Ausschnitt mit einem Füllmaterial gefüllt ist, wobei jeder Einschnitt, der höchstens nur in eine der seitlichen Flächen einmündet, mindestens einen Ausschnitt kreuzt, der im wesentlichen dieselbe Tiefe aufweist, und daß das genannte Material zumindest in neuem Zustand die Eigenschaft aufweist, mechanisch die Wände des aufgefüllten Ausschnitts zu verbinden und sich rascher abzunutzen als das Material, das die Lauffläche bildet, um auf dieses Weise fortlaufend und regelmäßig im Verlauf des Abrollens durch Abnutzung zu schwinden, um einen Entlüftungskanal für einen Teil der Luft zu bilden, die in den Einschnitten vorliegt.

2. Lauffläche für einen Reifen nach Anspruch 1, **dadurch gekennzeichnet, daß** bestimmte seiner vorspringenden Elemente (1, 20) mit mindestens einem blinden Einschnitt (9, 25) versehen sind, das heißt, einen Einschnitt, der nicht an irgendeiner der seitlichen Flächen der genannten Elementen einmündet, und dies gleichgültig, wie der Abnutzungsstand der genannten Lauffläche auch sein mag, wobei jeder blinde Einschnitt mindestens einen einmündenden und mit einem Füllmaterial gefüllten Ausschnitt (10, 26, 27) kreuzt, das sich rascher abnutzt als das Material, das die Lauffläche bildet, und daß jeder einmündende Ausschnitt eine Tiefe hat, die mindestens gleich 80% der Tiefe des Einschnitts oder der Einschnitte ist, den oder die er kreuzt.

3. Lauffläche für einen Reifen nach Anspruch 2, **dadurch gekennzeichnet, daß** der einmündende Ausschnitt (10), der mindestens einen nicht einmündenden Einschnitt (9) schneidet, auf mindestens zwei seitlichen Flächen des reliefartigen Elements (1) einmündet.

4. Lauffläche für einen Reifen nach irgendeinem der Ansprüche 1 bis 3, **dadurch gekennzeichnet, daß** die mittlere Breite der einmündenden Ausschnitte mindestens das 1,5-fache der mittleren Breite der nicht einmündenden Einschnitte beträgt.

5. Lauffläche für einen Reifen nach irgendeinem der Ansprüche 1 bis 4, **dadurch gekennzeichnet, daß** das Füllmaterial eine Mischung aus Gummi ist, dem eine Mineralverbindung zugesetzt ist, wie zum Beispiel ein durchsichtiger bzw. farbloser, wenig oder nicht verstärkender Füllstoff: Kreide, natürliche Silikate (Kaolin, Talkum, Glimmer), gemahlener Kieselgur, Tonerde, Füllstoffe, die durch ein chemisches Verfahren gewonnen wurden (Silikate von Mg, Al, Ca, wässerige Aluminiumsilikate, ausgefällte Kalzfümkarbonate), Ba-Sulfat und Oxide (Mg, Zn, Al).

6. Lauffläche für einen Reifen nach irgendeinem der Ansprüche 1 bis 5, **dadurch gekennzeichnet, daß** das Füllmaterial eine Gummimischung ist, der eine organische Verbindung zugesetzt ist, wie zum Beispiel geschnittene Fasern, Fäserchen von Thermoplasten, biologisch abbaubare Verbindungen (Polyesteramid, modifiziertes Stärkemehl, Chitin, Chitosan, polylaktische Säure) und Zellulosederivate (Zelluloseazetat, Lignin).

7. Lauffläche für einen Reifen nach irgendeinem der Ansprüche 1 bis 6, **dadurch gekennzeichnet, daß** das Füllmaterial in Form eines Bogens bzw. Blatts verwendet wird, der bzw. das quer zu seiner Dicke mindestens eine Öffnung aufweist, um die Gummimischung während des Abformens der genannten Lauffläche hindurchtreten zu lassen, um mindestens einen mechanischen Verbindungspunkt abzuformen, der die entgegengesetzten Flächen eines jeden gefüllten Ausschnitts miteinander verbindet.

8. Lauffläche für einen Reifen nach irgendeinem der Ansprüche 1 bis 7, **dadurch gekennzeichnet, daß** mindestens ein mit Füllmaterial gefüllter Ausschnitt in Richtung der Dicke der genannten Lauffläche einer Spur folgt, die mindestens eine Wellung oder eine Zickzackspur aufweist, um den mechanischen Halt des genannten Materials zu verbessern.

9. Reifen mit einer Lauffläche, die nach einem der Ansprüche 1 bis 8 definiert ist.
